# FASCICULE DE BREVET EUROPEEN

(11) **EP 3 227 247 B1**
(45) Date de publication et mention de la délivrance du brevet: **15.04.2020**
(21) Numéro de dépôt: 15808258.6
(22) Date de dépôt: 25.11.2015
(51) Int. Cl.: C04B 28/02, C04B 14/28, E01C 7/14, E01C 11/22

(54) **FABRICATION D'ÉLÉMENTS DE CONSTRUCTION EN BÉTON CONTENANT DES COQUILLAGES CONCASSÉS, AUTO DRAINANTS ET MÉCANIQUEMENT RÉSISTANTS**
HERSTELLUNG VON BAUELEMENTEN AUS BETON MIT ZERKLEINERTEN, SELBSTDRAINIERENDEN UND MECHANISCH FESTEN MUSCHELN
MANUFACTURING CONCRETE CONSTRUCTION ELEMENTS CONTAINING CRUSHED SEA-SHELLS, WHICH ARE SELF-DRAINING AND MECHANICALLY STRONG

(30) Priorité: 01.12.2014 FR 1402730; 08.06.2015 FR 1501181
(43) Date de publication de la demande: 11.10.2017
(73) Titulaire: Esitc Caen, 14610 Epron (FR)
(72) Inventeur: BOUTOUIL, Mohamed, 14123 Ifs (FR); NGUYEN, Dang Hanh, 14000 Caen (FR)
(74) Mandataire: Cabinet Chaillot
(86) Numéro de dépôt international: PCT/FR2015/000213
(87) Numéro de publication internationale: WO 2016/087720

(56) Documents cités:
- WO-A1-03/089384
- JP-A- H11 246 277
- JP-A- 2002 154 859
- JP-A- 2002 241 165
- US-A1- 2014 187 680
- US-B1- 6 197 423
- DATABASE WPI Week 201073 Thomson Scientific, London, GB; AN 2010-J78303 XP002750556, -& KR 100 939 237 B1 (DONGYEONGIENSSI CO LTD) 29 janvier 2010 (2010-01-29)

## Description

La présente invention concerne la fabrication d'éléments de construction en béton tels des pavés, des dalles ou des chapes coulées in situ, des murs, aptes à constituer des surfaces importantes verticales, horizontales ou inclinées, qui soient perméables aux liquides et en particulier à l'eau, notamment pour évacuer les eaux pluviales, et qui puissent aussi supporter des charges, admettre du trafic, des passages, des stationnements.

La gestion des eaux de pluie en milieu urbain devient de plus en plus problématique au fur et à mesure que les surfaces imperméables de chaussée, de parking et en général de surfaces construites sont plus importantes ; la difficulté étant encore accrue par le changement climatique qui rend les pluies plus violentes. Pour résoudre ce problème on tend à remplacer les revêtements imperméables par des revêtements poreux, notamment des enrobés bitumineux, mais leur prix plus élevé en limite l'emploi, notamment l'épaisseur.

Par ailleurs la consommation d'agrégats (graviers, sable,...) pour la construction épuise les ressources naturelles et dégrade les paysages.

Dans le même temps existent en tant que déchets qui encombrent, qu'il faut débarrasser et traiter, d'importantes quantités de coquilles vides d'animaux marins dans la laisse de mer ou issus de la pêche et de l'industrie qui en découle, de la conchyliculture, en particulier le long des littoraux marins. C'est ainsi qu'en Europe on peut compter en milliers de tonnes la quantité de coquilles vides disponibles.

La présente invention vise à porter remède à ces problèmes.

Il est par ailleurs connu par le document de brevet JP2002241165 de réaliser des blocs de béton perméables à l'eau formés de deux couches : une couche superficielle obtenue à partir de 40 à 70% de coquilles Saint-Jacques broyées 5 à 25% d'un autre agrégat et 15 à 40% de ciment, une seconde couche dite couche de base en un béton traditionnel contenant des agrégats et du ciment et exempte de coquilles broyées. Dans cette structure à deux couches, donc non homogène, on peut penser que les deux caractéristiques de porosité et de tenue mécanique ne puissent pas coexister dans aucune des deux couches, la couche superficielle ou la couche de base, et que pour maitriser la tenue mécanique il faille abandonner l'emploi de coquillages. Cette structure n'atteint donc la porosité désirée que dans sa couche superficielle qui contient les coquilles broyées et elle n'obtient la tenue mécanique qu'en étant accolée à la couche de base qui elle est exempte de coquilles.

Le document JP2002154859 divulgue une composition pour béton perméable à l'eau comprenant des granulats et des agrégats en forme de bâtons.

Le document US 2014/187680 divulgue un béton drainant comprenant des agrégats, de ciment, des fibres et d'eau.

L'invention vise outre la résolution des problèmes environnementaux indiqués précédemment, à permettre la fabrication d'éléments de construction dont les caractéristiques de résistance mécanique et de perméabilité aux liquides soient ajustables et puissent être élevées.

Ainsi concernant la résistance mécanique, les éléments de construction selon l'invention conservent une résistance à la compression élevée malgré l'introduction d'une porosité qui crée une perméabilité aux liquides. L'invention permet d'atteindre une résistance à la compression supérieure à 2 MPa et pour certaines utilisations au moins autour de 14 MPa, valeur requise pour le parking et la circulation de véhicules automobiles, et même jusqu'à 30 MPa.

Concernant la perméabilité, l'invention vise des niveaux substantiels. La perméabilité à l'eau visée est d'au moins 0,03 mm/s, elle atteint les 20 mm/s avec certaines compositions, avec toutes les perméabilités intermédiaires permises.

Pour tout cela l'invention s'est d'abord attachée à étudier le phénomène de perméabilité afin d'en comprendre les mécanismes.

Elle propose pour cela un procédé de fabrication d'éléments de construction perméables à l'eau et mécaniquement résistants en un béton à partir d'un mortier ou pâte contenant un liant, notamment hydraulique et des granulats, dans lequel on contrarie l'empilement des granulats, pour créer des creux favorisant la perméabilité en introduisant dans la composition du mortier ou pâte des éléments substantiellement plats dont la taille est de l'ordre de celle des granulats, lesdits éléments substantiellement plats agissant comme des ponts qui s'appuient sur deux granulats voisins, les éléments substantiellement plats étant des produits coquilliers concassés, ou du verre concassé ou trempé fragmenté.

L'invention propose également une composition pour béton destinée à fabriquer des éléments de construction perméables à l'eau et mécaniquement résistants, contenant du liant, notamment hydraulique, et des granulats, ladite composition comprenant également en remplacement d'au moins une portion des granulats, des éléments substantiellement plats, étant des produits coquilliers concassés, en particulier marins, ou du verre concassé ou trempé fragmenté, dont la plus grande dimension est de l'ordre de la taille des plus gros des granulats.

Avantageusement elle propose de mélanger des éléments substantiellement plats, étant des produits coquilliers, de différentes tailles, ces tailles appartenant à un intervalle bordé par la plus petite des tailles et la plus grande des tailles, la plus petite des tailles étant sensiblement dix fois plus petite que la plus grande.

Toute composition selon l'invention est telle qu'au moins 5% de la masse de ses autres constituants, notamment granulats, est remplacée par une masse identique d'éléments sensiblement plats, étant des produits coquilliers, en particulier marins.

Selon l'invention, la quantité maximale de constituants, tels les granulats, remplacés par des éléments substantiellement plats est de l'ordre de 95%. Cette composition est applicable pour la fabrication d'éléments de construction perméables aux liquides, que ce soit des blocs tels des pavés, ou des dalles ou chapes perméables, préfabriqués ou réalisables in situ, des murs, quelle que soient leur disposition horizontale, verticale ou inclinée, quelles que soient leurs dimensions. Cette composition est également applicable à la réalisation de jonctions entre ces éléments précités.

L'invention sera maintenant décrite plus en détail en référence aux figures jointes qui représentent :
Figure 1: la disposition des constituants, notamment les granulats, et du liant dans un élément de construction,
Figure 2 : l'organisation modifiée des granulats, et du liant quand on introduit aussi des éléments substantiellement plats tels des produits coquilliers concassés.

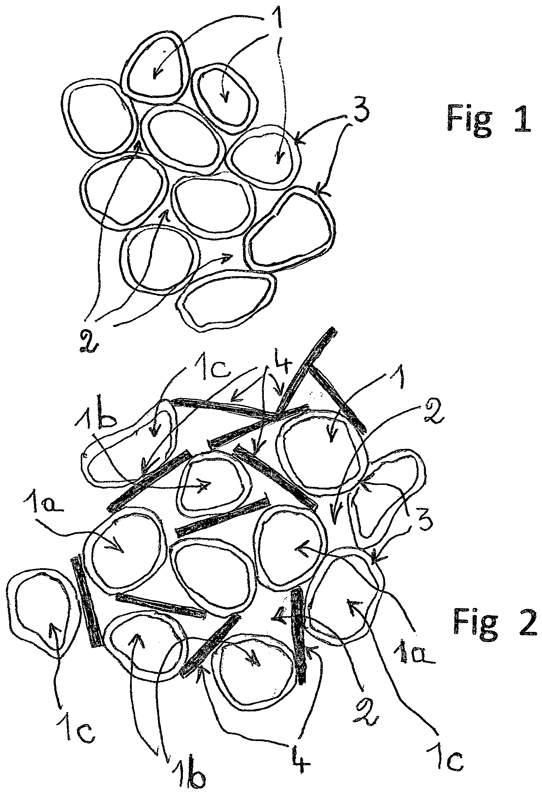

Comme montré sur cette fig 1 les constituants comme les granulats 1 de forme quelconque, s'emboitent les uns dans les autres pour minimiser l'espace occupé, en particulier quand on les soumet à une compression ou à un tassement par vibrations. Il en résulte des espaces tels que 2 entre ces granulats 1 mais leurs volumes sont limités. Ces volumes sont d'autant plus petits que la taille des granulats est plus faible et qu'ils trouvent mieux la possibilité de s'emboiter les uns dans les autres ou que sont aussi présents des granulats de plus petites tailles qui viennent se loger entre les granulats plus gros. Le liant, notamment ciment, chaux et/ou autre, s'est réparti au sein de l'empilement et il est souhaitable qu'il soit en quantité suffisante pour bien enrober les granulats 1 et former ainsi autour de chacun d'eux un gainage 3 qui au moment de la prise dudit liant, va réaliser un collage, bloquer l'empilement dans sa configuration et ainsi conférer la solidité mécanique à l'empilement.

On entend par granulats des graviers de tous types, du sable et autres matériaux susceptibles d'être incorporés dans le mortier ou de façon plus générale la pâte qui va agréger l'ensemble des constituants, ayant une solidité pour apporter au produit final une résistance mécanique, aptes à adhérer au liant et insensibles aux liquides en particulier à l'eau.

On utilise par ex des graviers ayant des tailles de l'ordre de 2 à 20 mm, du sable allant jusqu'à environ 4 mm

On entend par liant les liants hydrauliques à base de ciment, de chaux et/ou laitier qui sont le plus communément utilisés, mais aussi les liants hydrocarbonés et autres pour autant qu'ils permettent de lier les différents composants, qu'ils soient insensibles aux liquides et en particulier à l'eau, qu'ils soient durables et aptes à ne pas se dégrader dans les ambiances où ils seront utilisés. Indépendamment des critères techniques, dans le choix entre les différents liants possibles interviendra aussi le prix.

Comme montré sur la fig 2 des éléments substantiellement plats 4, étant des coquilles ou morceaux de coquilles, notamment marines, ou du verre concassé ou trempé fragmenté, sont introduits dans la composition de mortier ou pâte, utilisée pour fabriquer des éléments de construction en plus ou en remplacement des granulats 1 déjà montrés sur la fig 1. On retrouve sur cette fig 2 les granulats 1, les espaces 2 inter granulats et le gainage 3 de ciment autour des granulats 1 déjà montrés sur la fig 1. Dans la mesure où ces éléments plats 4 sont d'une taille suffisante, et on entend par là une dimension qui soit au moins du même ordre de grandeurs que la section des granulats 1, ils agissent comme des ponts qui s'appuient sur deux granulats 1 voisins, tels que la et 1b, interdisant la pénétration d'un troisième granulat tel que 1c dans l'espace 2 inter granulats entre 1a et 1b et perturbant ainsi l'emboitement serré des granulats 1. Il en résulte des espaces 2 inter granulats 1 moins comblés, des granulats 1 moins serrés, d'où une plus grande porosité de l'élément de construction final qui se traduit par une perméabilité aux liquides augmentée.

Comme éléments plats on a cité les produits coquilliers, notamment marins, du verre concassé ou trempé fragmenté, qui sont compatibles avec les liquides et notamment l'eau, durables, résistants et capables d'être collés par le liant.

Egalement on constate que les éléments substantiellement plats 4 s'empilent moins bien que des granulats 1, approximativement et globalement sphériques et que seuls ils sont aussi perturbateurs d'emboitements serrés et créent des porosités génératrices de perméabilité aux liquides.

Ces augmentations de porosité sont fonction notamment de la taille des éléments substantiellement plats 4, de la proportion d'éléments plats 4 introduits dans la composition qui servira à faire le mortier ou la pâte pour fabriquer les éléments de construction du type pavés, dalles, chapes,..., de la relation entre taille des granulats 1 et taille des éléments substantiellement plats 4.

Toute introduction d'éléments plats 4 procure de la perméabilité ; toute perturbation de l'empilement qui crée des porosités et donc de la perméabilité présente un risque de dégradation de la résistance mécanique des éléments de construction fabriqués in fine. Par ailleurs comme déjà dit l'invention s'impose des niveaux de performances tant en résistance mécanique des éléments de construction finaux pour permettre les utilisations visées (voies de circulation, voies de circulation automobile et parkings dans certains cas) qu'en perméabilité à l'eau ; pour cela elle définit des contraintes concernant la quantité d'éléments plats 4 et elle indique les meilleurs modes de réalisation. L'invention propose de remplacer au moins environ 5% et au maximum environ 95% de coquilles concassées, qu'elles soient toutes de la même espèce ou qu'elles constituent un mélange de diverses espèces, ces pourcentages étant des pourcentages en masse de coquilles par rapport à la masse totale de la composition sèche qui après ajout d'eau conduira au mortier puis après formage par moulage ou coulée et enfin prise, donnera l'élément de construction final. Dans ces conditions et à l'intérieur de cet intervalle de remplacement indiqué ci-dessus la résistance à la compression est comprise entre 2 et 30 MPa, la perméabilité à l'eau est supérieure 0,03 mm/s et peut atteindre des valeurs de l'ordre de 20 mm/s. Il est bien entendu que des remplacements entre les valeurs limites de cet intervalle permettent d'ajuster les valeurs de perméabilité et de résistance mécanique pour bien s'adapter aux utilisations visées. En dehors de cet intervalle de taux de remplacement on agit quand même sur la perméabilité mais on estime que soit elle n'apporte pas un gain suffisamment important, soit la résistance mécanique n'est pas assez forte.

Des éléments de construction, en particulier des pavés, incorporant des granulats 1 sous forme de graviers ayant une taille de 2 à 20 mm et/ou sous forme de sable de taille maximale de 4 mm, ainsi que des éléments plats 4, en l'occurrence des produits coquilliers marins, présentant une dimension moyenne à 10% près, c'est-à-dire la longueur de leur plus grand côté, également de 2 à 20 mm, en une quantité correspondant au remplacement 5 à 95% des granulats 1, montrent des caractéristiques de porosité, de perméabilité à l'eau et de résistance mécanique satisfaisantes qui correspondent aux objectifs de l'invention. D'autres pavés ont été réalisés en utilisant cette fois ci toujours des éléments plats 4 ayant une taille sensiblement de l'ordre de celle des granulats 1, mais en mélangeant en quantités égales des coquilles concassées d'au moins deux tailles différentes. Ce mélange améliore les performances mécaniques des éléments de construction obtenus. On peut penser alors que ces morceaux de coquillages fonctionnent pour certains comme montré et expliqué en relation avec la fig 2 mais peuvent aussi à certains endroits avoir plus de facilité pour mieux s'insérer ou commencer à s'insérer entre les granulats 1, ce qui a un effet bénéfique sur la résistance mécanique.

Il est apparu aussi que lors de la préparation du mortier il était avantageux de pratiquer une légère compaction et/ou de soumettre le mortier à la vibration pendant un temps court afin de favoriser le rapprochement des différents éléments, granulats et éléments plats, et ainsi améliorer les performances mécaniques des éléments de construction obtenus in fine.

Ces éléments de construction ayant de telles propriétés de perméabilité à l'eau et de résistance mécanique en éléments préfabriqués tels des pavés ou sous forme de dalles ou chapes coulées in situ sont utilisables pour réaliser des sols auto drainants capables de constituer des voies de passage ou de circulation y compris automobiles, des parkings, capable d'éliminer les eaux pluviales.

A titre d'ex non limitatif on a fabriqué des éléments de construction à partir des compositions résumées dans le tableau qui suit :

| | Composition 1 | Composition 2 | Composition 3 |
|---|---|---|---|
| Ciment (kg/m3) | ≈ 240 | ≈ 275 | ≈ 347 |
| Eau (kg/m3) | ≈ 84 | ≈ 70 | ≈ 129 |
| Total des granulats d'une composition de référence | ≈ 1300 kg | ≈ 1540 kg | ≈ 1610 kg |
| Granulats remplacés | ≈ 56% | ≈ 37% | ≈ 18.5 % |
| Graviers | ≈ 486 kg | ≈ 864 kg | ≈ 1205 kg |
| Sable | ≈ 86 kg | ≈ 100 kg | ≈ 105 kg |
| Coquillages | ≈ 728 kg | ≈ 576 kg | ≈ 300 kg |
| Porosité | 31 % | 22.5 % | 14 % |
| Perméabilité à l'eau | 19.5 mm/s | 2.4 mm/s | 0.3 mm/s |
| Résistance à compression | 5 Mpa | 20.4 MPa | 29.5 MPa |

Selon les compositions choisies par m3 de produit final, les quantités de liants hydrauliques s'échelonnent de 270 à 360 kg/m3, on emploie de 90 à 150 kg d'eau, le sable à une taille qui va jusque environ 4 mm, la taille des granulats s'étale entre 2 et 20 mm et les éléments plats et en particulier les coquillages concassés ont leur plus grande longueur qui va de 2 à 20 mm.

La présente invention permet aussi d'ajouter aux compositions précédemment proposées des additifs et/ou adjuvants, notamment du type de ceux couramment employés dans les bétons; elle permet aussi de colorer lesdites compositions.

## Revendications

1. Procédé pour fabriquer des éléments de construction en béton, perméables à l'eau et mécaniquement résistants contenant un liant et des granulats, **caractérisé en ce qu'**on contrarie l'empilement des granulats, pour ménager des creux favorisant la perméabilité en introduisant dans la composition destinée à conduire au béton des éléments substantiellement plats ayant une dimension qui est au moins du même ordre de grandeur que la section des granulats, lesdits éléments substantiellement plats agissant comme des ponts qui s'appuient sur deux granulats voisins, les éléments substantiellement plats étant des produits coquilliers concassés, ou du verre concassé ou trempé fragmenté.

2. Procédé selon la revendication 1 **caractérisé en ce qu'**avant prise du béton on pratique une légère compaction et/ou vibration de courte durée afin de favoriser le rapprochement des granulats et éléments plats.

3. Composition pour béton mécaniquement résistant et perméable à l'eau contenant un liant notamment hydraulique, et des granulats 1, **caractérisée en ce qu'**elle contient également, en remplacement d'une partie des granulats 1, des éléments substantiellement plats 4, qui sont des produits coquilliers concassés, ou du verre concassé ou trempé fragmenté, ayant une dimension qui est au moins du même ordre de grandeur que la section des granulats, lesdits éléments substantiellement plats agissant comme des ponts qui s'appuient sur deux granulats voisins.

4. Composition selon la revendication 3 **caractérisée en ce que** les éléments substantiellement plats 4 remplacent environ de 5% à 95% en masse des granulats 1.

5. Composition selon l'une quelconque des revendications 3 et 4 **caractérisée en ce que** les éléments substantiellement plats 4 forment un mélange d'au moins deux tailles différentes, les tailles extrêmes étant dans un rapport de 1 à 10.

6. Composition selon l'une des revendications 3 à 5 **caractérisée en ce qu'**elle contient des granulats 1 de taille moyenne comprise entre 2 et 20 mm et des éléments plats dont la taille va jusqu'à environ 20 mm.

7. Application de la composition selon l'une des revendications 3 à 6 à la réalisation d'éléments de construction perméables à l'eau et mécaniquement résistants appartenant au groupe suivant : blocs tels des pavés, dalles ou chapes coulées in situ, utilisé pour passages, voies de circulation, parkings, murs, jonctions entre éléments précédents.

8. Application selon la revendication 7 **caractérisé en ce que** les éléments de construction présentent une perméabilité à l'eau comprise entre 0,05 m m/s et 20 mm/s.

9. Application selon l'une des revendications 7 ou 8 **caractérisée en ce que** les éléments de construction présentent une résistance mécanique supérieure à 2 MPa.

## Patentansprüche

1. Verfahren zur Herstellung von wasserdurchlässigen und mechanisch festen Bauelementen aus Beton, enthaltend ein Bindemittel und Granulate, **dadurch gekennzeichnet, dass** der Stapel der Granulate gestört wird, um Hohlräume auszubilden, die die Durchlässigkeit fördern, durch Einführen, in die Zusammensetzung, die bestimmt ist, zu dem Beton zu führen, von substantiell flachen Elementen, die eine Abmessung haben, die mindestens derselben Größenordnung ist wie der Querschnitt der Granulate, wobei die substantiell flachen Elemente als Brücken agieren, die sich auf zwei benachbarten Granulaten abstützen, wobei die substantiell flachen Elemente zerkleinerte Muschelprodukte oder zerkleinertes oder gehärtetes fragmentiertes Glas sind.

2. Verfahren nach Anspruch 1, **dadurch gekennzeichnet, dass** vor dem Binden des Betons eine leichte Verdichtung und/oder kurzzeitige Vibration durchgeführt wird, um die Annäherung der Granulate und flachen Elemente zu fördern.

3. Zusammensetzung für mechanisch festen und wasserdurchlässigen Beton, enthaltend ein insbesondere hydraulisches Bindemittel und Granulate 1, **dadurch gekennzeichnet, dass** sie ebenfalls, als Ersatz für einen Teil der Granulate 1, substantiell flache Elemente 4 enthält, die zerkleinerte Muschelprodukte oder zerkleinertes oder gehärtetes fragmentiertes Glas sind mit einer Abmessung, die mindestens derselben Größenordnung ist wie der Querschnitt der Granulate, wobei die substantiell flachen Elementen als Brücken agieren, die sich auf zwei benachbarten Granulaten abstützen.

4. Zusammensetzung nach Anspruch 3, **dadurch gekennzeichnet, dass** die substantiell flachen Elemente 4 zirka 5 % bis 95 Ma% der Granulate 1 ersetzen.

5. Zusammensetzung nach einem der Ansprüche 3 und 4, **dadurch gekennzeichnet, dass** die substantiell flachen Elemente 4 ein Gemisch aus mindestens zwei unterschiedlichen Größen bilden, wobei die extremen Größen in einem Verhältnis von 1 bis 10 sind.

6. Zusammensetzung nach einem der Ansprüche 3 bis 5, **dadurch gekennzeichnet, dass** sie Granulate 1 mittlerer Größe zwischen 2 und 20 mm und flache Elemente enthält, deren Größe bis zirka 20 mm reicht.

7. Anwendung der Zusammensetzung nach einem der Ansprüche 3 bis 6 auf die Herstellung von wasserdurchlässigen und mechanisch festen Bauelementen, die zu der folgenden Gruppe gehören: Blöcke wie Pflastersteine, Platten oder Decken, vor Ort gegossen, die für Durchgänge, Zirkulationswege, Parkplätze, Mauern, Verbindungen zwischen vorangehenden Elementen verwendet werden.

8. Anwendung nach Anspruch 7, **dadurch gekennzeichnet, dass** die Bauelemente eine Wasserdurchlässigkeit zwischen 0,05 mm/s und 20 mm/s aufweisen.

9. Anwendung nach einem der Ansprüche 7 oder 8, **dadurch gekennzeichnet, dass** die Bauelemente eine mechanische Festigkeit über 2 MPa aufweisen.

## Claims

1. A method for manufacturing concrete construction elements, which are permeable to water and mechanically strong, containing a binder and aggregates, **characterized in that** stacking of the aggregates is counteracted, to arrange recesses promoting permeability by introducing, into the composition intended to result in the concrete, substantially flat elements having a size that is at least of the same order of magnitude as the cross-section of the aggregates, said substantially flat elements acting as bridges that bear on two adjacent aggregates, the substantially flat elements being crushed seashell products, or crushed or fragmented tempered glass.

2. The method according to claim 1, **characterized in that** before setting of the concrete, slight compacting and/or vibration of short duration is carried out in order to promote the approach of the aggregates and flat elements.

3. A composition for mechanically strong and water-permeable concrete containing a binder, in particular hydraulic, and aggregates 1, **characterized in that** it also contains, as a replacement for part of the aggregates 1, substantially flat elements 4, which are crushed seashell products, or crushed or fragmented tempered glass, having a size that is at least of the same order of magnitude as the cross-section of the aggregates, said substantially flat elements acting as bridges that bear on two adjacent aggregates.

4. The composition according to claim 3, **characterized in that** the substantially flat elements 4 replace about 5% to 95% by mass of the aggregates 1.

5. The composition according to any one of claims 3 and 4, **characterized in that** the substantially flat elements 4 form a mixture of at least two different sizes, the extreme sizes being in a ratio of 1 to 10.

6. The composition according to one of claims 3 to 5, **characterized in that** it contains aggregates 1 with an average size of between 2 and 20 mm and flat elements whose size reaches up to about 20 mm.

7. An application of the composition according to one of claims 3 to 6 to the production of water-permeable and mechanically strong construction elements belonging to the following group: blocks such as paving stones, slabs or screeds poured *in situ,* used for passages, traffic lanes, parking lots, walls, junctions between preceding elements.

8. The application according to claim 7, **characterized in that** the construction elements have a water permeability of between 0.05 mm/s and 20 mm/s.

9. The application according to one of claims 7 or 8, **characterized in that** the construction elements have a mechanical strength greater than 2 MPa.
